# EUROPÄISCHE PATENTSCHRIFT

(11) **EP 2 744 058 B1**
(45) Veröffentlichungstag und Bekanntmachung des Hinweises auf die Patenterteilung: **12.07.2017**
(21) Anmeldenummer: 14158628.9
(22) Anmeldetag: 29.03.2012
(51) Int. Cl.: H02G 3/22

(54) **Leitungsdurchführung zur Befestigung in einer Gebäudewand**
Wire feedthrough for fixing in a wall of a building
Passage de conduite pour fixation dans une paroi de bâtiment

(43) Veröffentlichungstag der Anmeldung: 18.06.2014
(62) Teilanmeldung aus: 12002302.3
(73) Patentinhaber: Hauff-Technik GmbH & Co. KG, 89568 Hermaringen (DE)
(72) Erfinder: Kurz, Ralf, 89537 Giengen (DE)
(74) Vertreter: König Szynka Tilmann von Renesse Patentanwälte Partnerschaft mbB

(56) Entgegenhaltungen:
- EP-A1- 0 681 134
- EP-A1- 2 071 688
- DE-U1-202009 006 352
- JP-A- 9 196 242

## Beschreibung

Die vorliegende Erfindung betrifft eine Leitungsdurchführung zur dichtenden Befestigung in einer Durchlassöffnung einer Gebäudewand.

Zu diesem Zweck weist die Leitungsdurchführung eine Durchführungshülse auf, die für ein Einsetzen in die Durchlassöffnung und zum Hindurchführen einer Leitung ausgelegt ist. Die Durchführungshülse wird üblicherweise nach dem Bohren einer entsprechenden Durchlassöffnung in diese eingeschoben und anschließend darin befestigt. Im Zuge jüngster Entwicklungen erfolgt die Befestigung dabei mittels eines zunächst fließfähigen und in diesem Zustand in den von Durchführungshülse und Laibung der Durchlassöffnung begrenzten Ringraum injizierten Harzes, welches nach dem Aushärten einerseits die Durchführungshülse in der Durchlassöffnung hält und andererseits den Ringraum dichtend verschließt. Beispielhaft wird verwiesen auf EP 2 071 688.

Die Harzinjektion erfolgt dabei mit einem zwischen Durchführungshülse und Laibung der Durchlassöffnung eingeschobenen Einfüllschlauch, dessen proximales Ende mit einer das Harz enthaltenden Kartusche verbunden wird. Der Kartuscheninhalt wird dann beispielsweise mittels einer Kartuschenpistole oder Kartuschenpresse über den Einfüllschlauch in den Ringraum gepresst.

Die EP 0 681 134 A1 zeigt eine Leitungsdurchführung mit einem doppelwandigen Rohr; in dem von der Doppelwandung gebildeten Ringraum sind in Rohrrichtung aufeinander folgend die Komponenten eines Mehrkomponenten-Schaums angeordnet und durch eine dünne Folie voneinander getrennt. Nach dem Einsetzen des Rohrelements in eine Durchlassöffnung werden die Komponenten durchmischt, und der expandierende Schaum tritt aus Öffnungen sowohl zur Laibung als auch zur Leitung hin aus.

Der vorliegenden Erfindung liegt die Aufgabe zugrunde, eine Leitungsdurchführung mit verbesserten Gebrauchseigenschaften anzugeben.

Erfindungsgemäß löst diese Aufgabe eine Leitungsdurchführung nach dem Hauptanspruch.

Ein das außenseitig der Durchführungshülse angeordnete Füllvolumen begrenzender Mantel hat sich als vorteilhaft erwiesen, weil die Füllsubstanz beispielsweise auch mit zunächst nur geringer Viskosität flüssig sein kann. Eine direkt in den Ringraum injizierte Füllsubstanz würde dann noch vor einem Anhärten unerwünschter Weise aus der Durchlassöffnung oder in dieser z. B. in Hohlräume oder Mauerspalten fließen. Aus diesem Grund hält der Mantel die Füllsubstanz zumindest anfangs und jedenfalls innerhalb gewisser Grenzen, also insbesondere bis zu einem bestimmten Druck, räumlich beisammen; diese kann anhärten, wobei die Viskosität zunimmt.

Da insofern insbesondere eine auf den Injektionszeitpunkt bezogene Anfangsphase maßgeblich sein kann, muss der Mantel im weiteren Verlauf nicht zwingend bestehen bleiben. Der Mantel kann also beispielsweise unter dem Druck der Füllsubstanz auch aufreißen oder sich etwa auch aufgrund einer Reaktion mit der Füllsubstanz auflösen. Das Füllvolumen soll also zumindest in der Anfangsphase von dem Mantel begrenzt sein, beispielsweise gemeinsam von Mantel und Durchführungshülse. Das Füllvolumen ist allerdings nicht zwingend abgeschlossen, sondern es können in dem Mantel etwa auch Austrittsöffnungen für die Füllsubstanz vorgesehen sein. Insofern kann der Mantel beispielsweise auch aus einem starren Material gebildet sein; bevorzugt ist jedoch ein, vorzugsweise elastisch, verformbarer Mantel, etwa aus einem Elastomermaterial.

Erfindungsgemäß wird dem Füllvolumen die fließfähige Füllsubstanz nun nicht über einen neben der Durchführungshülse in die Durchlassöffnung geschobenen Einfüllschlauch zugeführt, sondern über eine in der Durchführungshülse vorgesehene Austrittsöffnung. Die Durchführungshülse ist also vorteilhafterweise derart ausgelegt, dass die Füllsubstanz dem Füllvolumen über das Innere der Durchführungshülse zugeführt werden kann, etwa über ein in der Durchführungshülse vorgesehenes Rohrelement. Die fließfähige Füllsubstanz kann dann an der Austrittsöffnung aus- und damit in das Füllvolumen eintreten. Erfindungsgemäß kann also ein von einem Rohrelement begrenzter Zuführkanal in die Durchführungshülse integriert werden.

In bevorzugter Ausgestaltung ist das Rohrelement als Bestandteil der Leitungsdurchführung vorgesehen. Selbstverständlich lassen sich die im Folgenden anhand einer entsprechenden Leitungsdurchführung mit Rohrelement erläuterten Vorteile jedoch auch erzielen, wenn das Rohrelement und eine Leitungsdurchführung nach Anspruch 1 beispielsweise als gesonderte Bauteile vertrieben und dann erst vom Endverbraucher, also etwa einem Monteur auf der Baustelle, entsprechend kombiniert werden, sodass der Zuführkanal (dann) in die Durchführungshülse integriert ist.

Bei den aus dem Stand der Technik bekannten Leitungsdurchführungen wird hingegen der Einfüllschlauch neben der Durchführungshülse in die Durchlassöffnung gesetzt. Der Durchmesser der Durchlassöffnung muss dementsprechend so groß gewählt werden, dass die aufaddierten Durchmesser von Durchführungshülse und Einfüllschlauch Berücksichtigung finden. Der Erfinder hat nun festgestellt, dass entsprechend große Durchlassöffnungen nachteilig sein können, insbesondere wenn diese gebohrt werden müssen. So erfordern entsprechend große Bohröffnungen beispielsweise besonderes Bohrwerkzeug und ist ein erhöhter Materialabtrag notwendig, was die Bohrdauer und damit auch die Montagezeit erhöht.

Neben der Möglichkeit, die Montagedauer zu verkürzen, kann ein verringerter Bohrdurchmesser auch vorteilhaft sein, weil bei einem Arbeiten mit feinerem Werkzeug die Gefahr von Ausbrüchen verringert sein kann, was die Bohrung präziser werden lässt.

Generell gibt es zwei Möglichkeiten, eine erfindungsgemäße Leitungsdurchführung zu realisieren: Der Zuführkanal kann einerseits innerhalb des in der Durchführungshülse angeordneten Rohrelements vorgesehen sein. Um dabei für Füllsubstanz und Leitung jeweils hinreichend Querschnitt zur Verfügung zu stellen, wird bei dieser Ausführungsform das Rohrelement vorzugsweise nach der Füllsubstanzzufuhr aus der Durchführungshülse genommen und die Leitung anschließend hindurchgeführt. Andererseits kann der Zuführkanal auch außerhalb des Rohrelements, also zwischen Rohrelement und Durchführungshülse angeordnet sein; die Füllsubstanz kann also beispielsweise über einen außerhalb des Rohrelements liegenden Ringraum zugeführt und die Leitung durch das (in der Durchführungshülse verbleibende) Rohrelement hindurchgeführt werden.

Wenngleich die Erfindung sich nicht auf Durchführungshülsen mit kreisförmigem Querschnitt beschränkt, lässt sich die mögliche Reduktion des Durchlassöffnungsdurchmessers an dem zuletzt genannten Beispiel mit einem ringraumförmigen Zuführkanal besonders gut veranschaulichen: Werden Durchführungshülse und Einfüllschlauch mit beispielsweise einem Durchmesser von jeweils 4 cm nebeneinander in eine Durchlassöffnung gesetzt, muss deren Durchmesser mindestens 8 cm betragen und steht dann für Füllsubstanz und Leitung (bei vernachlässigter Wandstärke von Durchführungshülse und Einfüllschlauch) jeweils eine Querschnittsfläche von circa 12,6 cm² zur Verfügung. Wird hingegen das Rohrelement koaxial mit der Durchführungshülse innerhalb dieser vorgesehen, muss der Außendurchmesser der Durchführungshülse auf nur 5,7 cm erhöht werden und kann der Durchlassöffnungsdurchmesser entsprechend kleiner gewählt werden. Die für Leitung und Füllsubstanz jeweils zur Verfügung stehende Querschnittsfläche bleibt dabei dieselbe, wenn das Rohrelement einen Durchmesser von 4 cm hat und das Harz über den zwischen Durchführungshülse und Rohrelement angeordneten Ringraum zugeführt wird, dessen Querschnittsfläche jener des Einfüllschlauchs mit einem Durchmesser von 4 cm entspricht.

Mit einem entsprechend verringerten Durchmesser der Durchlassöffnung kann vorteilhafterweise auch die zur Auffüllung des Raums zwischen Durchführungshülse und Laibung der Durchlassöffnung notwendige Menge an Füllsubstanz reduziert werden. Bei dem eben skizzierten Beispiel müsste im erstgenannten Fall, also bei einer Durchlassöffnung mit einem Durchmesser von 8 cm und einer entsprechenden Querschnittfläche von circa 50,3 cm², nämlich eine Flächendifferenz von circa 25 cm² über die entsprechende Länge aufgefüllt werden, wohingegen im zweitgenannten Fall der Durchmesser der Durchlassöffnung so angepasst werden kann, dass nahezu kein Blindvolumen entsteht.

Als Füllsubstanz kann beispielsweise ein Zwei-Komponenten-Material verwendet werden, dessen Komponenten zur Reaktion gebracht werden und so etwa einen Schaum bilden. Gleichwohl kann allgemein gesprochen als Füllsubstanz jedes zunächst zumindest viskos-zähflüssig fließfähige, also unter Druck bewegbare, und im Zeitverlauf dann jedenfalls teilweise aushärtende Material eingesetzt werden; das Aushärten kann etwa infolge einer Reaktion zugeführter Komponenten untereinander geschehen und / oder beispielsweise auch durch den Kontakt mit Luft bedingt sein.

Die Durchführungshülse ist ein rohrförmiger Körper und, damit bei der Expansion der Füllsubstanz eine Durchgangsöffnung für die Leitung freigehalten wird, üblicherweise starr ausgebildet; für die Durchführungshülse kann also beispielsweise ein metallisches Material oder aber auch ein Kunststoffmaterial vorgesehen sein, das auf eine Krafteinwirkung hinreichend verformungsarm reagiert, etwa Acrylnitril-Butadien-Styrol. Vorzugsweise ist die Durchführungshülse von der Austrittsöffnung für die fließfähige Füllsubstanz (bzw. einer Mehrzahl oder Vielzahl entsprechender Öffnungen) abgesehen geschlossen ausgebildet.

Weitere bevorzugte Ausgestaltungen der Erfindung sind in den abhängigen Ansprüchen angegeben, wobei wie in der gesamten Offenbarung nicht im Einzelnen zwischen der Erläuterung der Leitungsdurchführung und der Beschreibung von Verfahren zu deren Einbau oder entsprechenden Verwendungen unterschieden wird; die Offenbarung ist implizit im Hinblick auf sämtliche Kategorien zu verstehen.

Eine erste bevorzugte Ausführungsform betrifft eine Leitungsdurchführung mit einem in der Durchführungshülse vorgesehenen Rohrelement, das ein Zuführvolumen begrenzt, durch welches dem Füllvolumen die fließfähige Füllsubstanz zuführbar ist, und zwar über die in der Durchführungshülse vorgesehene Austrittsöffnung.

In weiterer Ausgestaltung ist der Zuführkanal innerhalb des Rohrelements angeordnet, wobei das Rohrelement besonders bevorzugt in der Durchführungshülse verschiebbar und aus dieser herausnehmbar ist. Bei der Montage der Leitungsdurchführung kann das Rohrelement dann also beispielsweise zunächst in die Durchführungshülse eingeschoben werden, und zwar derart, dass das distale, im einfachsten Fall offene Ende des Rohrelements nahe der Austrittsöffnung in der Durchführungshülse angeordnet ist. Aus dem proximalen Ende der Durchführungshülsle ragt das Rohrelement heraus, und das distale Ende der Durchführungshülse wird vorübergehend verschlossen. Wird nun die Füllsubstanz über das Rohrelement zugeführt, füllt sich zunächst ein Abschnitt der Durchführungshülse damit, ehe die Füllsubstanz über die Austrittsöffnung in das Füllvolumen gelangt.

Ist das Füllvolumen vollständig gefüllt, kann ein Großteil der sich innerhalb der Durchführungshülse befindenden Füllsubstanz nach einem An- bzw. Aushärten zusammen mit dem Rohrelement herausgenommen werden. Durch eine Positionierung der Austrittsöffnung nahe des distalen Endes der Durchführungshülse kann der mit Füllsubstanz gefüllte Abschnitt davon idealerweise entsprechend kurz gehalten werden; die sich dort befindende (die Durchgangsöffnung der Durchführungshülse nun versperrende) Füllsubstanz kann dann nämlich beispielsweise auch mit dem Rohrelement herausgedrückt werden.

Vorzugsweise ist das Rohrelement wie eben beschrieben in der Durchführungshülse verschiebbar und aus dieser herausnehmbar, wobei weiter bevorzugt zusätzlich ein distales Ende des Rohrelements verschlossen und in dem Rohrelement eine seitliche Öffnung vorgesehen ist. Um dem Füllvolumen die fließfähige Füllsubstanz zuzuführen, wird die seitliche Öffnung in dem Rohrelement dann beispielsweise zumindest teilweise mit der Austrittsöffnung der Durchführungshülse in Deckung gebracht. Seitliche Öffnung (des Rohrelements) und Austrittsöffnung der Durchführungshülse liegen also derart übereinander, dass der Zuführkanal druckfluidisch mit dem Füllvolumen verbunden ist und die Füllsubstanz entsprechend zugeführt werden kann.

Das Innenvolumen wird also zunächst (über das Rohrelement) zur Füllsubstanzzufuhr genutzt und steht dann nach Entnahme des Rohrelements zum Hindurchführen der Leitung zur Verfügung. Würde die Füllsubstanz hingegen unmittelbar (also nicht durch ein zusätzlich eingeschobenes Rohrelement) über die Durchführungshülse zugeführt, ließe sich durch die dann mit an- bzw. ausgehärteter Füllsubstanz aufgefüllte Durchführungshülse keine Leitung mehr führen.

Durch den endseitigen Verschluss des Rohrelements und die seitliche, mit der Austrittsöffnung in Deckung gebrachte Öffnung kann vorteilhafterweise die Kontaktfläche zwischen Füllsubstanz und Durchführungshülse verringert werden, haftet also letztlich weniger Füllsubstanz an einer Durchführungshülseninnenwand; insbesondere ein die Durchführungshülse über ihren gesamten Querschnitt abdeckender Füllsubstanzpfropfen kann so vermieden werden.

In weiterer Ausgestaltung des Rohrelements mit verschlossenem distalen Ende und seitlicher Öffnung ist distal der seitlichen Öffnung eine umlaufende Dichtung zwischen Durchführungshülse und zusätzlichem Rohr vorgesehen; vorzugsweise ist eine zweite umlaufende Dichtung zwischen Rohrelement und Durchführungshülse proximal der seitlichen Öffnung vorgesehen. Die distale Dichtung beugt einem Vordringen der Füllsubstanz in einen an den Verschluss des Rohrelements anschießenden Bereich der Durchführungshülse vor, hilft also die Bildung eines die Durchführungshülse verschießenden Füllsubstanzpfropfens verhindern.

Wird beidseits der seitlichen Öffnung eine entsprechende Dichtung vorgesehen, kann die fließfähige Füllsubstanz idealerweise nur in dem kurzen, ringraumförmigen Abschnitt zwischen den Dichtungen in Kontakt mit der Durchführungshülseninnenwand gelangen. Die übrige Durchführungshülse wird vorteilhafterweise von Füllsubstanz weitestgehend freigehalten.

In bevorzugter Ausgestaltung ist als Verschluss des Rohrelements ein auf- oder einsetzbares Abschlussstück vorgesehen, das vorzugsweise auch die seitliche Öffnung des Rohrelements zur Verfügung stellt.

Ein entsprechendes Abschlussstück kann dann etwa in vorteilhafter Weise in Verbindung mit einem beispielsweise auch als Meterware verfügbaren Rohrelement verwendet werden und stellt die vorstehend beschriebenen Funktionen zur Verfügung. Dementsprechend ist besonders bevorzugt auch die Dichtung bzw. sind beidseits der seitlichen Öffnung angeordnete Dichtungen als Teil des Abschlussstücks ausgebildet. Das Abschlussstück kann beispielsweise in einem Spritzgussverfahren hergestellt werden; die seitliche Öffnung und eine sich in Durchführungsrichtung erstreckende, die seitliche Öffnung mit dem Rohrelement verbindende Öffnung können beispielsweise auch spanend eingebracht werden.

Generell ist das Rohrelement ein länglicher Körper, dessen Ausdehnung in Erstreckungsrichtung ein Vielfaches jener senkrecht dazu beträgt. Es kann also beispielsweise ebenso ein flexibler Schlauch aus Kunststoffmaterial vorgesehen werden wie etwa auch ein Rohr aus starrem Material, etwa aus Metall oder einem Kunststoff wie Acrylnitril-Butadien-Styrol.

Bei einer zu dem verschiebbaren Rohrelement alternativen Ausführungsform begrenzt das Rohrelement den Zuführkanal nicht in seinem Inneren, sonder außerhalb. Der Zuführkanal ist also zwischen Durchführungshülse und Rohrelement angeordnet. Bei dieser eingangs bereits im Zuge der Verringerung des Durchlassöffnungsdurchmessers beschriebenen Variante muss das Rohrelement dann nach der Füllsubstanzinjektion nicht aus der Durchführungshülse genommen werden, weil es in seinem Inneren eine Durchgangsöffnung zum Hindurchführen der Leitung freihält.

Es kann also beispielsweise ein Rohrelement mit einer jener der Durchführungshülse entsprechenden Länge vorgesehen und in der Durchführungshülse angeordnet sein. Ist der Spalt zwischen Durchführungshülse und Rohrelement dann beispielsweise an der distalen Stirnseite verschlossen, kann die Füllsubstanz in den Zuführkanal eingebracht werden und tritt dann an der Austrittsöffnung aus und somit in das Füllvolumen ein. Auch an dem proximalen Ende kann der Spalt zwischen Durchführungshülse und Rohrelement verschlossen sein und die Füllsubstanz beispielsweise über eine seitliche (bei der Montage außerhalb der Durchlassöffnung liegende) Eintrittsöffnung injiziert werden; es kann jedoch auch in dem proximalen Verschluss selbst eine sich in Durchführungsrichtung erstreckende Eintrittsöffnung vorgesehen sein.

Im Allgemeinen ist eine koaxiale Anordnung von Rohrelement und Durchführungshülse bevorzugt. Gleichwohl kann auch eine exzentrische Anordnung Vorteile bieten, etwa wenn Durchführungshülse und Rohrelement aneinander anliegen und dann an der gegenüberliegenden Seite ein Zuführkanal zur Verfügung steht, das verglichen mit einem Ringraum einen lokal größeren Strömungsquerschnitt bietet.

Generell, also unabhängig davon, ob der Zuführkanal innerhalb oder außerhalb des Rohrelements angeordnet ist, ist eine weitere Ausführungsform bevorzugt, die auch unabhängig von den Merkmalen des Hauptanspruchs als Erfindung gesehen wird und in dieser Form offenbart sein soll. Dabei ist die Austrittsöffnung von dem proximalen Ende der Durchführungshülse um in dieser Reihenfolge zunehmend bevorzugt mindestens 10 %, 20 %, 30 %, 40 %, 50 %, 60 %, 70 % deren in Durchführungsrichtung genommener Länge entfernt. Sofern eine Mehrzahl Austrittsöffnungen vorgesehen sind, gilt dies in bevorzugter Ausgestaltung entsprechend für jede einzelne, sodass ein proximaler, durch die vorstehenden Prozentangaben vorgegebener Bereich der Durchführungshülse frei von Austrittsöffnungen bleibt.

Eine derart gestaltete Durchführungshülse kann vorteilhafterweise so in eine Durchlassöffnung eingeschoben werden, dass die Austrittsöffnung bzw. - öffnungen innerhalb der Wand angeordnet sind und gleichzeitig ein von Austrittsöffnungen freier Abschnitt der Durchführungshülse aus der Durchlassöffnung herausragt. Die Durchführungshülse kann also insbesondere im Falle eines zwischen Rohrelement und Durchführungshülse angeordneten Zuführvolumens außerhalb der Durchlassöffnung mit einer Zuführeinheit zum Zuführen der Füllsubstanz verbunden werden. Es wird also beispielsweise außerhalb der Durchlassöffnung eine Kartuschenpistole oder -presse mit der Durchführungshülse verbunden, wobei die Einleitung der Füllsubstanz in die Durchlassöffnung dann über den nicht mit Austrittsöffnungen versehenen Abschnitt der Durchführungshülse erfolgt.

Diese Ausführungsform ist jedoch auch vorteilhaft, wenn das Zuführvolumen innerhalb des Rohrelements vorgesehen ist und dieses nach dem Zuführen entnommen wird. In diesem Fall schützt der nicht mit Austrittsöffnungen "perforierte", aus der Durchlassöffnung herausragende Bereich nämlich einerseits das Rohrelement beim Einschieben zu dem Mauerwerk hin und beugt so einer Beschädigung vor; andererseits lässt sich das Rohrelement in einen nicht perforierten proximalen Bereich auch leichter einfädeln.

Generell bietet die durch die erfindungsgemäße Durchführungshülse mit Austrittsöffnung erreichbare Verringerung des Durchlassöffnungsdurchmessers auch den Vorteil, dass bei einem im Verhältnis zur Durchführungshülse hinreichend klein gewählten Durchlassöffnungsdurchmesser die Füllsubstanz sogar ohne außenseitig der Durchführungshülse vorgesehenem Mantel injiziert werden kann. Ist nämlich etwa ein zwischen Durchführungshülse und Durchlassöffnung angeordneter Ringraum im Verhältnis zu seiner in Durchführungsrichtung genommenen Länge eher "dünnwandig", tritt kaum Füllsubstanz aus der Durchlassöffnung aus, selbst wenn kein sie anfänglich zusammenhaltender Mantel vorgesehen ist.

In diesem Zusammenhang kann auch eine nachstehend noch weiter im Detail beschriebene Ausführungsform von besonderem Interesse sein, nämlich ein an dem distalen Ende der Durchführungshülse zur Anlage an der Gebäudewand vorgesehenes Endstück. In besonders bevorzugter Ausgestaltung unterbindet dieses also jedenfalls weitgehend einen Austritt der Füllsubstanz aus dem distalen Ende der Durchlassöffnung; von dem proximalen Ende der Durchlassöffnung ist die Austrittsöffnung um in dieser Reihenfolge zunehmend bevorzugt mindestens 10 %, 20 %, 30 %, 40 %, 50 %, 60 %, 70 % der in Durchführungsrichtung genommenen Dicke der Gebäudewand entfernt, die Füllsubstanz wird also besonders bevorzugt näher der mit dem Endstück verschlossenen distalen Öffnung eingebracht. Sofern eine Mehrzahl Austrittsöffnungen vorgesehen sind, gilt dies entsprechend für jede einzelne. Selbstverständlich beziehen sich diese wie auch die vorstehenden Angaben in besonders bevorzugter Weise auf entsprechende Verwendungen.

Gleichermaßen hinsichtlich entsprechender Verwendungen ist noch zu ergänzen, dass die Durchführungshülse bei der Montage vorzugsweise so in der Gebäudewand angeordnet wird, dass aus deren proximalem Ende ein Durchführungshülsenabschnitt von in dieser Reihenfolge zunehmend bevorzugt mindestens 1 cm, 2 cm, 3 cm, 5 cm, 10 cm, 15 cm, 20 cm herausragt. So kann vorteilhafterweise wie vorstehend beschrieben eine Zuführeinheit für die Füllsubstanz außerhalb der Gebäudewand mit der Durchführungshülse verbunden werden. Für eine Umsetzung der vorstehend genannten Möglichkeit, eine Durchführungshülse ohne Mantel vorzusehen, wird der Durchlassöffnungsdurchmesser in dieser Reihenfolge zunehmend bevorzugt höchstens 25 %, 20 %, 15 %, 10 %, 5 % größer als der Durchmesser der Durchführungshülse gewählt. Vorzugsweise ist der Durchmesser der Durchlassöffnung in dieser Reihenfolge zunehmend bevorzugt höchstens 15 mm, 10 mm, (7,5) mm, 5 mm, 4 mm größer als der Durchmesser der Durchführungshülse.

In bevorzugter Ausgestaltung wird bei einem außerhalb des Rohrelements vorgesehenem Zuführvolumen über dessen gesamten Querschnitt verteilt Füllsubstanz zugeführt, verteilt ein zur Verbindung mit der Durchführungshülse vorgesehenes Anschlusselement also die Füllsubstanz entsprechend, also etwa auf ein ringförmiges Querschnittsprofil. Üblicherweise weitet ein solches Anschlussstück den Strömungsquerschnitt gegenüber einem vorgelagerten Kanalbereich. Es kann also beispielsweise ein sich nach Art eines Trichters weitendes Anschlussstück auf die Durchführungshülse gesetzt und zuvor das Rohrelement mit beispielsweise einem Stöpsel verschlossen werden. Das Verteilen der Füllsubstanz über den gesamten Querschnitt ist bei einer Mehrzahl Austrittsöffnungen vorteilhaft, weil diese dann unabhängig von ihrer Position in Umlaufrichtung mit Füllsubstanz versorgt werden, bietet jedoch auch im Falle einer einzigen Austrittsöffnung Vorteile, weil die entsprechend verteilte Füllsubstanz die Durchführungshülse nicht einseitig mit Druck beaufschlagt, also nicht einseitig belastet.

Eine weitere, ebenfalls unabhängig von den Merkmalen des Hauptanspruchs als offenbart anzusehende Ausführungsform greift zwar das Prinzip des zwischen Durchführungshülse und Rohrelement angeordneten, etwa ringraumförmigen Zuführvolumens auf, verzichtet jedoch gegebenenfalls auf die Austrittsöffnung in der Durchführungshülse. Die Füllsubstanz wird beispielsweise durch einen proximalen, eher starr ausgebildeten Abschnitt der Durchführungshülse zugeführt und sammelt sich in einem distalen Abschnitt davon. Dieser ist eher elastisch / viskoplastisch verformbar, kann also Eigenschaften wie vorstehend für den Mantel angegeben haben, und wird durch die zugeführte Füllsubstanz aufgebläht. Bei dieser Ausführungsform legt sich also die Durchführungshülse selbst an die Laibung der Durchlassöffnung an; gleichwohl kann darin auch eine Austrittsöffnung vorgesehen sein, sodass die Füllsubstanz den distalen Abschnitt der Durchführungshülse einerseits aufbläht, jedoch auch teilweise austritt, um an der Durchlassöffnung anzuhaften. Bevorzugt ist gleichwohl eine über ihre gesamte Länge starr ausgebildete Durchführungshülse, etwa aus Hartkunststoff wie beispielsweise PVC oder ABS.

Im Allgemeinen, also auch im Falle der Ausführungsform mit herausnehmbarem Rohrelement, kann in der Durchführungshülse eine Mehrzahl Austrittsöffnungen für die Füllsubtanz vorgesehen sein, beispielsweise in Umlaufrichtung verteilt, vorzugsweise äquidistant. Die Austrittsöffnungen können jedoch auch in Leitungsrichtung verteilt angeordnet sein, was insbesondere in Verbindung mit dem den Zuführkanal außerhalb begrenzenden Rohrelement vorteilhaft sein kann. Dabei können beispielsweise auch Austrittsöffnungen unterschiedlichen Querschnitts vorgesehen werde, etwa mit bezogen auf die Fließrichtung der Füllsubstanz zunehmendem Querschnitt, sodass trotz des abnehmenden Drucks die Menge an je Austrittsöffnung austretender Füllsubstanz über die Länge konstant gehalten werden kann.

In weiterer Ausgestaltung des den Zuführkanal außerhalb begrenzenden Rohrelements sind Rohrelement und Durchführungshülse durch einen Steg zueinander beanstandet; vorzugsweise ist eine Mehrzahl Stege vorgesehen, die besonders bevorzugt in Umlaufrichtung äquidistant verteilt sind. Eine entsprechende Durchführungshülse mit Rohrelement und Stegen kann beispielsweise auch einstückig ausgebildet sein und etwa durch Extrusion hergestellt werden.

Bei einer erfindungsgemäßen Leitungsdurchführung ist unabhängig davon, ob der Zuführkanal inner- oder außerhalb des Rohrelements angeordnet ist, vorzugsweise an dem distalen Ende der Durchführungshülse ein Endstück vorgesehen, das für eine Anlage an der Gebäudewand ausgelegt ist und dafür vorzugsweise eine umlaufende Dichtung aufweist. Das Endstück wird beispielsweise in Anlage an eine Wandaußenfläche gebracht und zusammen mit der Durchführungshülse während des Zuführens der Füllsubstanz verspannt und so in fester Anlage gehalten, etwa mit einer innenwandseitig vorgesehenen, die Durchführungshülse zum Gebäudeinneren hin unter Zugspannung setzenden Spanneinrichtung.

Wie bereits eingangs erwähnt, bezieht sich die vorliegende Erfindung auch auf ein Verfahren zur dichtenden Befestigung einer entsprechenden Leitungsdurchführung in einer Durchlassöffnung einer Gebäudewand. Dabei wird die Durchführungshülse in die Durchlassöffnung gesetzt und wird dem Füllvolumen die fließfähige Füllsubstanz über den von dem Rohrelement begrenzten Zuführkanal zugeführt; die Füllsubstanz tritt aus der in der Durchführungshülse vorgesehenen Austrittsöffnung aus und damit in das Füllvolumen ein.

Bei einer der bevorzugten Ausführungsformen, nämlich jener mit dem innerhalb des Rohrelements vorgesehenen Zuführkanal, wird das Rohrelement nach dem Zuführen des fließfähigen Materials aus der Durchführungshülse genommen und steht der Raum dann für das Hindurchführen der Leitung zur Verfügung.

Die Erfindung betrifft ferner die Verwendung eines vorstehend beschriebenen, in der Durchführungshülse verschiebbaren Rohrelements und / oder eines entsprechenden Abschlussstückes für eine erfindungsgemäße Leitungsdurchführung, also etwa zum Zusammensetzen einer solchen. Ein entsprechendes Rohrelement bzw. Abschlussstück (welches durch Ein- oder Aufsetzen in oder auf ein konventionelles Rohr ein den Erfindungsgedanken verkörperndes Rohrelement zur Verfügung stellt) kann nämlich beispielsweise auch unabhängig von der Durchführungshülse vertrieben werden, etwa als Nachrüstteil zu bereits ausgelieferten Leitungsdurchführungen.

Bei der Leitung kann es sich beispielsweise um eine Stromleitung, Wasserleitung, Gasleitung oder Telekommunikationsleitung, insbesondere Glasfaser-basiert, beziehungsweise auch um ein Leerrohr zur Aufnahme einer solchen Leitung handeln.

Im Folgenden wird die Erfindung anhand von Ausführungsbeispielen näher erläutert, wobei die einzelnen Merkmale auch in anderer Kombination erfindungswesentlich sein können.

Im Einzelnen zeigt
- Figur 1: eine Leitungsdurchführung mit innerhalb des Rohrelements vorgesehenem Zuführkanal;
- Figur 2: eine Leitungsdurchführung mit außerhalb des Rohrelements vorgesehenem Zuführkanal;
- Figur 3: senkrecht zur Durchführungsrichtung orientierte Schnitte einer konventionellen Leitungsdurchführung und erfindungsgemäßer Leitungsdurchführungen;
- Figur 4a: eine Durchführungshülse, ein Rohrelement und ein Abschlussstück als Einzelteile einer Leitungsdurchführung mit innerhalb des Rohrelements vorgesehenem Zuführkanal;
- Figur 4b: die Einzelteile gemäß Figur 4a in zusammengesetzter Form;
- Figur 5: eine Durchführungshülse ohne außenseitig davon vorgesehenem Mantel.

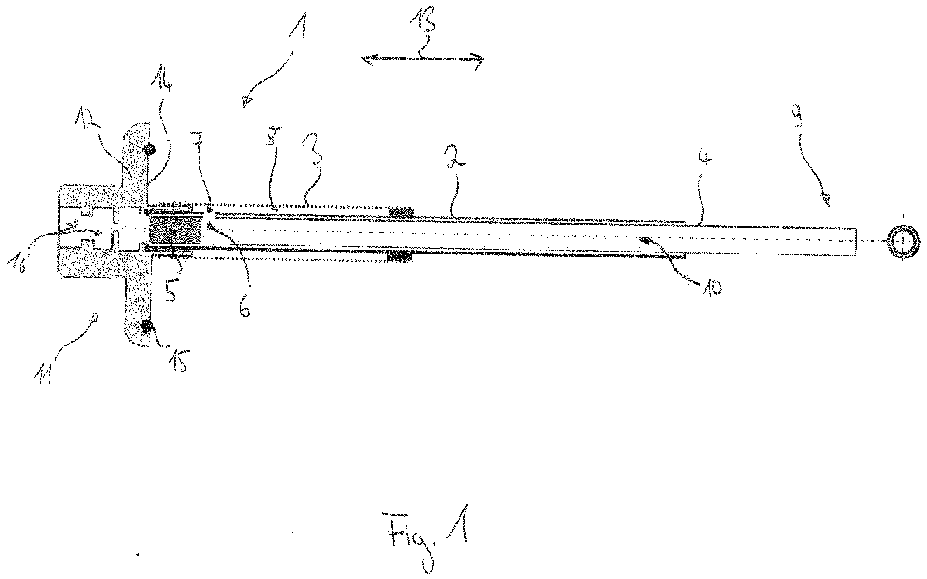

Figur 1 zeigt eine erfindungsgemäße Leitungsdurchführung 1 mit einer Durchführungshülse 2 und einem außenseitig davon vorgesehenem Mantel 3 aus einer mit kurzen Schlitzen perforierten, elastisch dehnbaren Elastomerfolie. In die Durchführungshülse 2 ist ein Rohrelement 4 eingeschoben, dessen distales Ende mit einem Verschluss 5 verschlossen ist. Eine seitliche Öffnung 6 in dem Rohrelement ist mit einer seitlichen Austrittsöffnung 7 in der Durchführungshülse in Deckung gebracht, sodass einem von dem Mantel 3 begrenzten Füllvolumen 8 folgendermaßen ein Zwei-Komponenten-Schaum zugeführt werden kann: Das proximale Ende 9 des Rohrelements 4 wird mit einer den Zwei-Komponenten-Schaum enthaltenden Kartusche (nicht gezeigt) verbunden, deren Inhalt dann mittels einer Kartuschenpistole in den von dem Rohrelement 4 begrenzten Zuführkanal 10 gedrückt wird. Ist der Zwei-Komponenten-Schaum bis zu dem Verschluss 5 vorgedrungen, tritt er über die seitliche Öffnung 6 und die Austrittsöffnung 7 aus, also in das Füllvolumen 8 ein.

Der Mantel 3 expandiert unter dem Druck des Zwei-Komponenten-Schaums und legt sich dichtend an eine Laibung der Durchlassöffnung in der Gebäudewand an (der Übersichtlichkeit halber sind Wand, Durchlassöffnung und entsprechend auch Laibung nicht gezeigt; der Durchmesser der Durchlassöffnung ist etwas größer als jener des in der Figur noch nicht expandierten Mantels 3). Aus den in dem Mantel 3 vorgesehenen Schlitzen tritt Zwei-Komponenten-Schaum aus und stellt so eine dichtende Verbindung zu der Laibung der Durchlassöffnung her.

Nach dem Aushärten des Zwei-Komponenten-Schaums wird das Rohrelement 4 aus der Durchführungshülse 2 gezogen, und zwar vom distalen Ende 9 her (also in der Figur nach rechts). Das distale Ende 9 steht zu diesem Zweck sowie zum Zwecke der Verbindung mit der Kartusche aus der Durchführungshülse 2 hervor. Der Zuführkanal 10 ist beim Herausziehen dann mit Zwei-Komponenten-Schaum gefüllt; ein im Bereich von seitlicher Öffnung 6 und Austrittsöffnung 7 ausgebildeter, sich zeitlich erstreckender Steg aus Zwei-Komponenten-Schaum kann unter gewisser Kraftaufwendung abgerissen werden. Nachdem das Rohrelement 4 aus der Durchführungshülse 2 genommen ist, steht das innere der Durchführungshülse 2 zum Hindurchführen einer Leitung zur Verfügung.

An einem distalen Ende 11 der Durchführungshülse ist ein scheibenförmiges Endstück 12 vorgesehen, das mit einer sich senkrecht zur Durchführungsrichtung 13 erstreckenden Anlagefläche 14 an der Gebäudewand anliegt, und zwar üblicherweise an einer Wandaußenseite. Als zusätzliche Dichtung (zusätzlich zu der Dichtung mittels Zwei-Komponenten-Schaum) ist ein umlaufendes Butylband 15 vorgesehen, welches bereits einem Eintritt von Feuchtigkeit in die Durchlassöffnung vorbeugen kann.

Eine in dem Endstück 12 vorgesehene Innenkontur 16 dient der Aufnahme und dem Halt eines einschiebbaren Steckfittings, mit dem beispielsweise zwei zur Aufnahme eines Glasfaserkabels vorgesehene Rohre miteinander verbunden sein können. Die Aufnahmekontur 16 dichtet dann zum Steckfitting hin und das Steckfitting zum Glasfaserkabel hin.

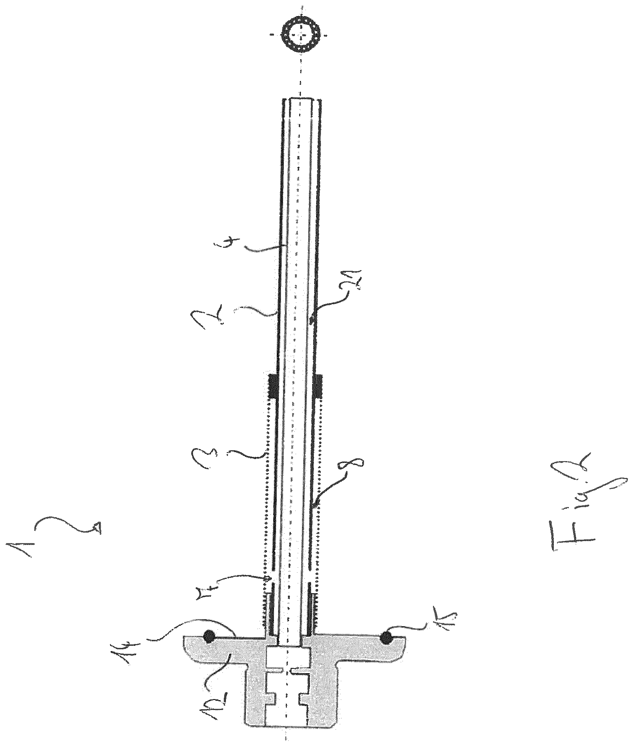

Das Endstück 12, die Durchführungshülse 2 und der Mantel 3 sind bei der Ausführungsform gemäß Figur 2 analog zu Figur 1 aufgebaut. Die Leitungsdurchführung 1 wird gleichermaßen vor einem Zuführen des Zwei-Komponenten-Schaums in die Durchlassöffnung gesetzt und die Anlagefläche 14 mit Dichtband 15 in Anlage mit der Wandaußenseite gebracht. Dabei kann vor einem Zuführen des fließfähigen Materials das proximale Ende der Durchführungshülse 2 mit einer Spannvorrichtung gegen die Wandinnenseite verspannt werden, um bei und nach der Befestigung einen sicheren Kontakt zwischen der Anlagefläche 14 (mit Dichtband 15) und der Wandaußenseite herzustellen; auch insofern unterscheidet sich die Ausführungsform gemäß Figur 2 nicht von jener gemäß Figur 1.

Bei der Ausführungsform gemäß Figur 2 ist das Zuführkanal 21 allerdings nicht innenseitig des Rohrelements 4, sondern außenseitig davon vorgesehen. Der Zuführkanal 21 liegt also zwischen Durchführungshülse 2 und Rohrelement 4. Rohrelement 4 und Durchführungshülse 2 sind koaxial angeordnet, wobei der Ringspalt zwischen beiden distal durch das Endstück 12 verschlossen ist.

Wird nun am proximalen Ende Zwei-Komponenten-Schaum in den Zuführkanal 21 eingebracht, dringt dieser bis zu dem distalen Verschluss bzw. bis zu der seitlichen Austrittsöffnung 7 in der Durchführungshülse vor und gelangt jedenfalls über die Austrittsöffnung 7 in das vom Mantel 3 begrenzte Füllvolumen 8.

Bei dieser Ausführungsform verbleibt das Rohrelement 4 in der Durchführungshülse 2; das Rohrelement 4 hält in seinem Inneren eine Durchgangsöffnung zum Hindurchführen der Leitung frei. Der ringraumförmige Zuführkanal 21 ist nach dem Zuführen des Zwei-Komponenten-Schaums weiterhin mit diesem gefüllt und bleibt es auch im Anschluss. Die die Leitung somit umgebende, ringraumförmige Schaumschicht kann dann vorteilhafterweise auch eine gewisse Isolations- bzw. Dämpfungswirkung haben.

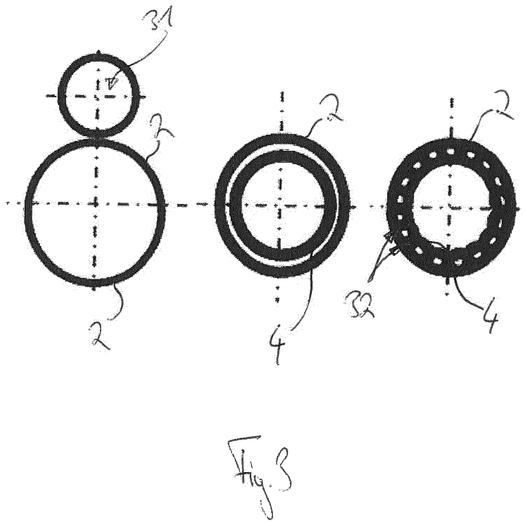

Figur 3 zeigt senkrecht zur Durchführungsrichtung 13 genommene Querschnitte der Leitungsdurchführung gemäß Figur 1 (Mitte) und Figur 2 (rechts) im Vergleich zu einer Leitungsdurchführung mit einem außerhalb der Durchführungshülse 2 vorgesehenen Zuführkanal 31. Durch den erfindungsgemäß innerhalb der Durchführungshülse 2 vorgesehenen Zuführkanal kann der benötigte Durchlassöffnungsdurchmesser reduziert werden, was die bereits eingangs erwähnten Vorteile bietet. In dieser Figur sind ferner die im Falle eines außerhalb des Rohrelements 3 vorgesehenen Zuführkanals 21 zwischen Rohrelement 4 und Durchführungshülse 2 vorgesehenen Stege 32 veranschaulicht. Diese beabstanden Rohrelement 4 und Durchführungshülse 2 zueinander, gewährleisten also die Stabilität des Zuführkanals 21 auch unter Druckeinwirkung des Zwei-Komponenten-Schaums.

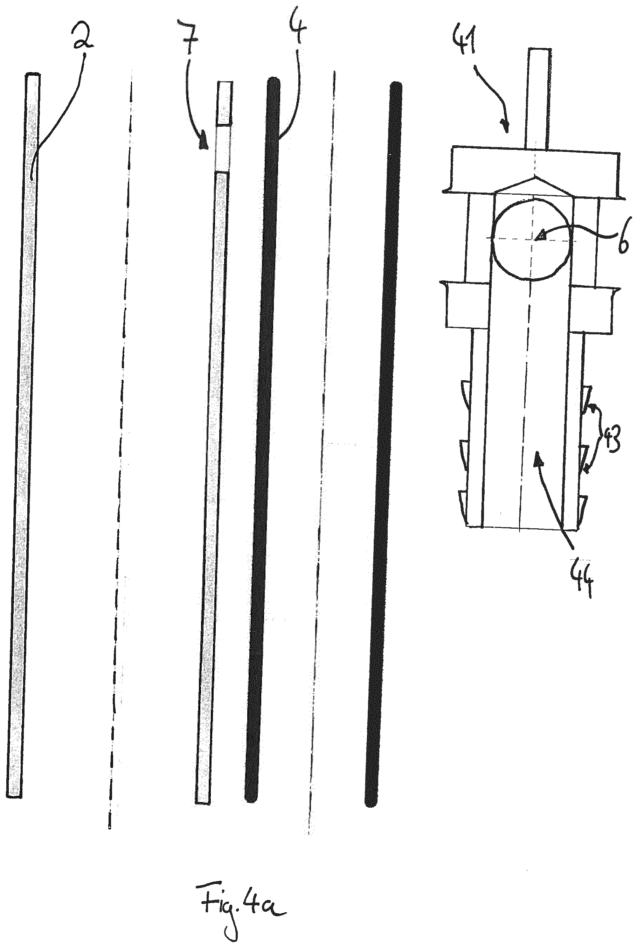

Figur 4a zeigt eine Durchführungshülse 2, ein Rohrelement 4 und ein Abschlussstück 41 als einzelne Bestandteile einer Leitungsdurchführung 1 mit innerhalb des Rohrelements 4 vorgesehenem Zuführkanal 10. Bei dem Rohrelement 4 handelt es sich um einen als Meterware erhältlichen Schlauch, in dessen distales Ende das Abschlussstück 41 eingesetzt wird.

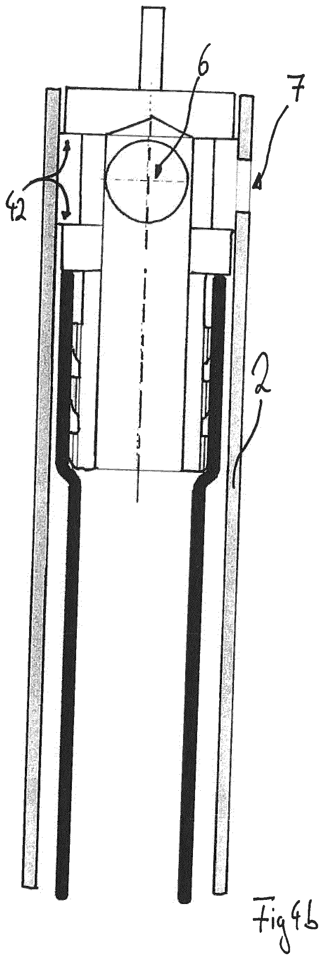

Figur 4b zeigt das Rohrelement 4 mit eingesetztem Abschlussstück 41 derart in der Durchführungshülse 2 positioniert, dass seitliche Öffnung 6 und Austrittsöffnung 7 in fluidischer Verbindung stehen. Um den Kontakt des Zwei-Komponenten-Schaums mit der Durchführungshülseninnenwand auf einen Abschnitt zu begrenzen, dessen axiale Ausdehnung im Wesentlichen dem Durchmesser der seitlichen Öffnung 6 entspricht, sind an dem Abschlussstück 41 beidseits der seitlichen Öffnung 6 umlaufende Dichtungen 42 vorgesehen. Dichtlippen gewährleisten dabei einerseits eine hinreichende Abdichtung des von Abschlussstück 41 und Durchführungshülseninnenwand begrenzten Ringraums und hindern andererseits aufgrund einer gewissen Verbiegbarkeit nicht das Verschieben des mit dem Abschlussstück 41 verlängerten Rohrelements 4 in der Durchführungshülse 2. (Ein ein- oder aufgesetztes Abschlussstück 41 wird dann als Bestandteil des Rohrelements 4 betrachtet, sodass die seitliche Öffnung 6 vorliegend also auch "in dem Rohrelement" vorgesehen ist.)

An einem proximalen Außenwandbereich des Abschlussstücks 41 sind umlaufende Vorsprünge 43 vorgesehen, deren Sägezahn-förmiges Querschnittsprofil ein Einsetzen in das Rohrelement 4 erlaubt, ein ungewolltes Herausrutschen jedoch weitestgehend unterbindet. Ein entsprechendes Abschlussstück kann spritzgegossen werden, wobei die seitliche Öffnung 6 und die axiale Durchgangsöffnung 44 mit einem Bohrer eingebracht werden. Die seitliche Öffnung 6 durchsetzt das Abschlussstück vollständig; gleichwohl wird durch die umlaufenden Dichtungen 42 der Zwei-Komponenten-Schaum durch die Austrittsöffnung 7 geleitet, selbst wenn seitliche Öffnung 6 und Austrittsöffnung 7 wie vorliegend dargestellt um 90° zueinander verdreht sind. Ein Vorteil dieser Ausführungsform besteht auch darin, dass beim Einschieben des Rohrelements 4 in die Durchführungshülse 2 (bezogen auf die Umlaufrichtung) keine besondere Orientierung der beiden zueinander erforderlich ist; die seitliche Öffnung 6 muss nicht zwingend mit der Austrittsöffnung 7 in Deckung gebracht werden, sondern es reicht die fluidische Verbindung der beiden aus.

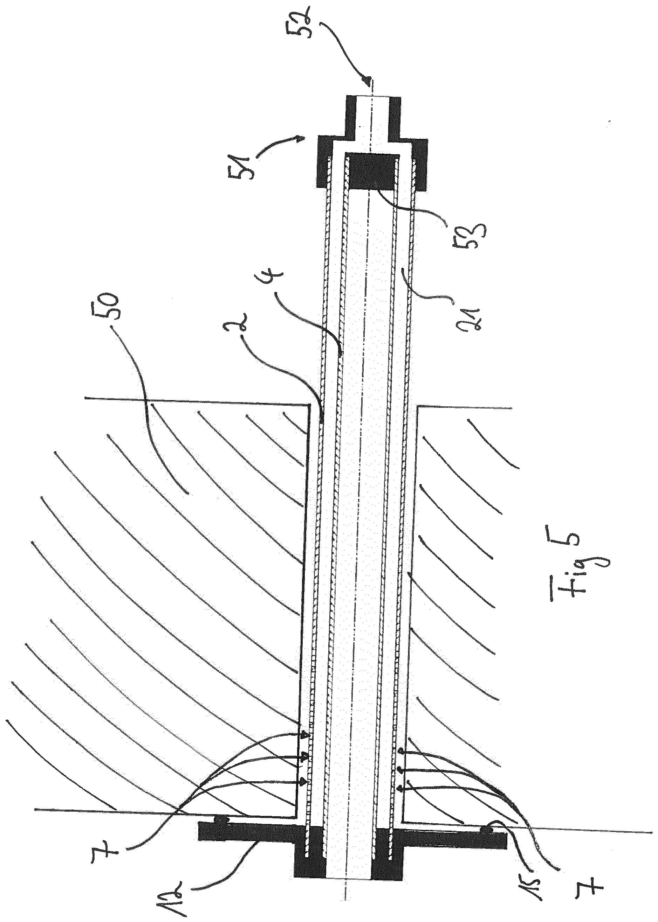

Figur 5 illustriert eine Durchführungshülse 2, die ohne außenseitig davon vorgesehenem Mantel in eine Durchlassöffnung in einer Gebäudewand 50 gesetzt ist. Am distalen Ende der Durchführungshülse 2 ist ein den Zuführkanal 21 verschließendes Endstück 12 vorgesehen, das an der Gebäudewand 50 anliegt.

Auf das proximale, aus der Gebäudewand 50 herausragende Ende der Durchführungshülse 2 ist ein Anschlussstück 51 aufgesetzt, dessen proximale Öffnung 52 mit einer (nicht gezeigten) Kartuschenpistole oder -presse verbunden wird. Vor dem Aufsetzen des Anschlussstücks 51 wird das proximale Ende des Rohrelements 4 mit einem Stopfen 53 verschlossen. Wird über die Öffnung 52 dann Zweikomponentenschaum zugeführt, tritt dieser über den gesamten Umfang verteilt in den Zuführkanal 21 ein und erreicht dementsprechend auch die über den Umfang verteilten Austrittsöffnungen 7 gleichmäßig.

Die Austrittsöffnungen 7 sind von dem proximalen Ende der Durchlassöffnung 70 % der in Durchführungsrichtung 13 genommenen Dicke der Gebäudewand 50 entfernt, sodass der Zweikomponentenschaum nahe des distalen Endes der Durchlassöffnung aus der Durchführungshülse 2 austritt. Dort begrenzt das Endstück 12 mit umlaufender Dichtung 15 den Austritt des Zweikomponentenschaums aus der Durchlassöffnung, sodass sich dieser in der Durchlassöffnung, also in dem von Laibung der Durchlassöffnung und Durchführungshülse 2 begrenzten Ringraum verteilt. Damit der Zweikomponentenschaum nicht dennoch aus dem proximalen Ende der Durchlassöffnung herausfließt, ist deren Durchmesser nur 5 % größer als der Durchmesser der Durchführungshülse 2 (die Figur ist nicht maßstäblich).

## Patentansprüche

1. Leitungsdurchführung (1) zur dichtenden Befestigung in einer Durchlassöffnung einer Gebäudewand mit
einer Durchführungshülse (2), die für ein Einsetzen in die Durchlassöffnung und zum Hindurchführen einer Leitung ausgelegt ist,
einer in der Durchführungshülse (2) vorgesehenen Austrittsöffnung (7), über welche einem Füllvolumen (8) außenseitig der Durchführungshülse (2) eine fließfähige Füllsubstanz zuführbar ist,
wobei die Austrittsöffnung (7) von dem proximalen Ende der Durchführungshülse (2) in Durchführungsrichtung (13) um mindestens 30 % der in Durchführungsrichtung (13) genommenen Länge der Durchführungshülse (2) entfernt ist und ein proximaler, durch diese Prozentangabe vorgegebener Bereich der Durchführungshülse (2) frei von Austrittsöffnungen (7) bleibt,
mit einem in der Durchführungshülse (2) vorgesehenen Rohrelement (4), das einen Zuführkanal (10, 21) begrenzt, durch welchen dem Füllvolumen (8) die fließfähige Füllsubstanz zuführbar ist, und zwar über die in der Durchführungshülse (2) vorgesehene Austrittsöffnung (7).

2. Leitungsdurchführung (1) nach Anspruch 1, bei welcher der Zuführkanal (10) innerhalb des Rohrelements (4) vorgesehen ist.

3. Leitungsdurchführung (1) nach Anspruch 2, bei welcher das Rohrelement (4) in der Durchführungshülse (2) verschiebbar und aus dieser herausnehmbar ist.

4. Leitungsdurchführung (1) nach Anspruch 3, bei welcher ein distales Ende des Rohrelements verschlossen und in dem Rohrelement eine seitliche Öffnung (6) vorgesehen ist, welche zum Zwecke des dem Füllvolumen (8) das fließfähige Material Zuführens in fluidische Verbindung mit der Austrittsöffnung (7) der Durchführungshülse (2) gebracht werden kann.

5. Leitungsdurchführung (1) nach Anspruch 4, bei welcher zumindest distal der seitlichen Öffnung (6), vorzugsweise beidseits davon, eine umlaufende Dichtung (42) zwischen Durchführungshülse und zusätzlichem Rohr vorgesehen ist, um einer Verunreinigung der Durchführungshülse (2) mit fließfähigem Material vorzubeugen.

6. Leitungsdurchführung (1) nach Anspruch 4 oder 5, bei welcher als Verschluss des Rohrelements (4) ein auf- oder einsetzbares Abschlussstück (41) vorgesehen ist, welches vorzugsweise auch die seitliche Öffnung (6) des Rohrelements (4) und weiter bevorzugt zumindest distal von dieser, besonders bevorzugt beidseits davon, eine umlaufende Dichtung (42) zur Verfügung stellt.

7. Leitungsdurchführung (1) nach Anspruch 1, bei welcher der Zuführkanal (21) außerhalb des Rohrelements (4) vorgesehen und damit zwischen Rohrelement (4) und Durchführungshülse (2) angeordnet ist.

8. Leitungsdurchführung (1) nach Anspruch 7, bei welcher Rohrelement (4) und Durchführungshülse (2) durch einen Steg (32) voneinander beabstandet sind.

9. Leitungsdurchführung (1) nach Anspruch 7 oder 8, bei welcher die Füllsubstanz dem Zuführkanal (21) in einer zur Durchführungsrichtung (13) senkrechten Schnittebene betrachtet über dessen gesamten Querschnitt verteilt zuführbar ist.

10. Leitungsdurchführung (1) nach einem der vorstehenden Ansprüche, bei welcher außenseitig der Durchführungshülse (2) ein Mantel (3) vorgesehen ist, der dazu ausgelegt ist, das zur Aufnahme der fließfähigen Füllsubstanz vorgesehene Füllvolumen (8) zu begrenzen.

11. Verfahren zum dichtenden Befestigen einer Leitungsdurchführung (1) mit
einer Durchführungshülse (2) zum Hindurchführen einer Leitung (3) und
einem in der Durchführungshülse (2) vorgesehenen Rohrelement (4), in einer Durchlassöffnung einer Gebäudewand, wobei
die Durchführungshülse (2) in die Durchlassöffnung gesetzt und einem Füllvolumen (8), das außenseitig der Durchführungshülse (2) angeordnet ist, eine fließfähige Füllsubstanz über einen Zuführkanal (10, 21), der von dem Rohrelement (4) begrenzt wird, zugeführt wird und aus einer in der Durchführungshülse (2) vorgesehenen Austrittsöffnung (7) austritt, wobei die Austrittsöffnung (7) von dem proximalen Ende der Durchführungshülse (2) in Durchführungsrichtung (13) um mindestens 30 % der in Durchführungsrichtung (13) genommenen Länge der Durchführungshülse (2) entfernt ist, also ein proximaler, durch diese Prozentangabe vorgegebener Bereich der Durchführungshülse (2) frei von Austrittsöffnungen (7) bleibt.

12. Verfahren nach Anspruch 11 in Verbindung mit einem der Ansprüche 3 bis 6, wobei das Rohrelement (4) nach dem Zuführen des fließfähigen Materials aus der Durchführungshülse (2) genommen wird, sodass der zuvor von dem Rohrelement (4) eingenommene Raum für das Hindurchführen einer Leitung zur Verfügung steht.

13. Verwendung einer Leitungsdurchführung (1) zur dichtenden Befestigung in einer Durchlassöffnung einer Gebäudewand mit
einer Durchführungshülse (2), die für ein Einsetzen in die Durchlassöffnung und zum Hindurchführen einer Leitung ausgelegt ist,
einer in der Durchführungshülse (2) vorgesehenen Austrittsöffnung (7), über welche einem Füllvolumen (8) außenseitig der Durchführungshülse (2) eine fließfähige Füllsubstanz zuführbar ist,
wobei die Austrittsöffnung (7) von dem proximalen Ende der Durchführungshülse (2) in Durchführungsrichtung (13) um mindestens 30 % der in Durchführungsrichtung (13) genommenen Länge der Durchführungshülse (2) entfernt ist und ein proximaler, durch diese Prozentangabe vorgegebener Bereich der Durchführungshülse (2) frei von Austrittsöffnungen (7) bleibt,
mit
einem Rohrelement (4), wobei dieses in der Durchführungshülse (2) vorgesehen wird und einen Zuführkanal (10, 21) begrenzt, durch welchen dem Füllvolumen (8) die fließfähige Füllsubstanz zuführbar ist, und zwar über die in der Durchführungshülse (2) vorgesehene Austrittsöffnung (7).

14. Verwendung nach Anspruch 13 für eine Leitungsdurchführung (1) nach einem der Ansprüche 2 bis 10.

## Claims

1. A conduit duct (1) for being sealingly mounted in a through-opening in a building wall, having
a duct sleeve (2) which is adapted for an insertion into the through-opening and for leading through a conduit,
an outlet opening (7) provided in said duct sleeve (2), via which outlet opening (7) a filling substance capable of flowing can be fed to a filling volume (8) on the outside of said duct sleeve (2),
wherein said outlet opening (7) is spaced to the proximal end of said duct sleeve (2) in a duct direction (13) by at least 30 % of a length of said duct sleeve (2) taken in said duct direction (13) and a proximal region of said duct sleeve (2), which is defined by this percentage, remains free of outlet openings (7),
having a tube element (4) provided in said duct sleeve (2), which tube element (4) defines a feeding channel (10, 21), via which said filling substance capable of flowing can be fed to said filling volume (8), namely via said outlet opening (7) provided in said duct sleeve (2).

2. The conduit duct (1) according to claim 1, wherein said feeding channel (10) is provided within said tube element (4).

3. The conduit duct (1) according to claim 2, wherein said tube element (4) is movable in said duct sleeve (2) and can be taken out of the latter.

4. The conduit duct (1) according to claim 3, wherein a distal end of said tube element is closed and a lateral opening (6) is provided in said tube element which lateral opening (6) can be fluidically connected to said outlet opening (7) of said duct sleeve (2), for feeding said material capable of flowing to said filling volume (8).

5. The conduit duct (1) according to claim 4, wherein a circumferential sealing (42) is provided between said duct sleeve and said additional tube, namely at least distal to said lateral opening (6), preferably on both sides thereof, to prevent a dirtying of the duct sleeve (2) with material capable of flowing.

6. The conduit duct (1) according to claim 4 or 5, wherein an end cap which can be put on or inserted is provided as a closure of said tube element (4), which end cap (41) preferably also provides said lateral opening (6) of said tube element (4) and further preferred provides a circumferential sealing (42), at least distal of said lateral opening (6), particularly preferred on both sides thereof.

7. The conduit duct (1) according to claim 1, wherein said feeding channel (21) is provided outside of said tube element (4), namely is located between said tube element (4) and said duct sleeve (2).

8. The conduit duct (1) according to claim 7, wherein said tube element (4) and said duct sleeve (2) are spaced from one another by a bar (32).

9. The conduit duct (1) according to claim 7 or 8, wherein said filling substance can be provided to said feeding channel (21) distributed over the whole cross-section of the latter, seen in a sectional plane perpendicular to a duct direction (13).

10. The conduit duct (1) according to one of the preceding claims, wherein a jacket (3) is provided outside of said duct sleeve (2), which is adapted for defining said filling volume (8) for receiving said filling substance capable of flowing.

11. A method for sealingly mounting a conduit duct (1) having
a duct sleeve (2) for leading through a conduit and
a tube element (4) provided in said duct sleeve (2) in a through-opening in a building wall, wherein
said duct sleeve (2) is inserted into said through-opening and a filling substance capable of flowing is fed to a filling volume (8) provided on the outside of said duct sleeve (2), namely via a feeding channel (10, 21) which is defined by said tube element (4), and emerges from an outlet opening (7) provided in said duct sleeve (2), wherein said outlet opening (7) is spaced to the proximal end of said duct sleeve (2) in a duct direction (13) by at least 30 % of a length of said duct sleeve (2) taken in said duct direction (13) namely a proximal region of said duct sleeve (2), which is defined by this percentage, remains free of outlet openings (7).

12. The method according to claim 11 in combination with one of claims 3 to 6, wherein said tube element (4) is taken out of said duct sleeve (2) after said feeding of said material capable of flowing so that a space having been occupied by said tube element (4) is available for leading through a conduit then.

13. A use of a conduit duct (1) for being mounted sealingly in a through-opening in a building wall, which conduit duct (1) comprises
a duct sleeve (2) which is adapted for an insertion into said through-opening and for leading through a conduit,
an outlet opening (7) provided in said duct sleeve (2), via which a filling substance capable of flowing can be fed to a filling volume (8) on the outside of said duct sleeve (2),
wherein said outlet opening (7) is spaced to the proximal end of said duct sleeve (2) in a duct direction (13) by at least 30 % of a length of said duct sleeve (2) taken in said duct direction (13) and a proximal region of said duct sleeve (2), which is defined by this percentage, remains free of outlet openings (7)
with
a tube element (4) so that the latter is provided in said duct sleeve (2) and defines a feeding channel (10, 21), through which a filling substance capable of flowing can be fed to said filling volume (8), namely via said outlet opening (7) provided in said duct sleeve (2).

14. The use according to claim 13 for a conduit duct (1) according to one of claims 2 to 10.

## Revendications

1. Passage de conduite (1) destiné à être fixé de manière hermétique dans une ouverture de passage présente dans une paroi de bâtiment, comportant
un manchon de passage (2) conçu pour être mis en place dans l'ouverture de passage et destiné au passage d'une conduite;
une ouverture de sortie (7) prévue dans le manchon de passage (2) et par laquelle une substance de remplissage fluide peut être apportée à un volume de remplissage (8) sur l'extérieur du manchon de passage (2);
ladite ouverture de sortie (7) étant éloignée de l'extrémité proximale du manchon de passage (2), dans le sens du passage (13), d'au moins 30 % de la longueur du manchon de passage (2) considérée dans le sens du passage (13), et une zone proximale du manchon de passage (2), prédéfinie par ce pourcentage, demeurant exempte d'ouvertures de sortie (7);
et comportant un élément de tuyau (4) prévu dans le manchon de passage (2) et délimitant un canal d'amenée (10, 21) par lequel la substance de remplissage fluide peut être apportée au volume de remplissage (8), et ce par l'ouverture de sortie (7) prévue dans le manchon de passage (2).

2. Passage de conduite (1) selon la revendication 1, dans lequel le canal d'amenée (10) est prévu à l'intérieur de l'élément de tuyau (4).

3. Passage de conduite (1) selon la revendication 2, dans lequel l'élément de tuyau (4) peut coulisser dans le manchon de passage (2) et peut en être extrait.

4. Passage de conduite (1) selon la revendication 3, dans lequel une extrémité distale de l'élément de tuyau est obturée et en ce que l'élément de tuyau présente une ouverture latérale (6) pouvant être mise en communication fluidique avec l'ouverture de sortie (7) du manchon de passage (2) afin d'apporter la matière fluide au volume de remplissage (8).

5. Passage de conduite (1) selon la revendication 4, dans lequel il est prévu, au moins distalement de l'ouverture latérale (6), de préférence de part et d'autre de celle-ci, un joint périphérique (42) entre le manchon de passage et le tuyau supplémentaire afin d'empêcher la matière fluide de contaminer le manchon de passage (2).

6. Passage de conduite (1) selon la revendication 4 ou 5, dans lequel il est prévu un élément d'obturation (41) pouvant être mis en place sur ou dans l'élément de tuyau (4) afin de l'obturer, en mettant également à disposition de préférence l'ouverture latérale (6) de l'élément de tuyau (4) et encore plus préférablement, au moins distalement de cette dernière, tout particulièrement de part et d'autre de celle-ci, un joint périphérique (42).

7. Passage de conduite (1) selon la revendication 1, dans lequel le canal d'amenée (21) est prévu en dehors de l'élément de tuyau (4), en étant ainsi situé entre l'élément de tuyau (4) et le manchon de passage (2).

8. Passage de conduite (1) selon la revendication 7, dans lequel l'élément de tuyau (4) et le manchon de passage (2) sont séparés l'un de l'autre par une entretoise (32).

9. Passage de conduite (1) selon la revendication 7 ou 8, dans lequel la substance de remplissage peut être apportée au canal d'amenée (21) dans un plan de coupe perpendiculaire au sens du passage (13) en étant répartie sur l'intégralité de sa section transversale.

10. Passage de conduite (1) selon l'une quelconque des revendications précédentes, dans lequel une gaine (3) est prévue sur l'extérieur du manchon de passage (2) en étant conçue pour délimiter le volume de remplissage (8) prévu pour recevoir une substance de remplissage fluide.

11. Procédé de fixation hermétique d'un passage de conduite (1) comportant
un manchon de passage (2) destiné au passage d'une conduite (3) et
un élément de tuyau (4) prévu dans le manchon de passage (2), dans une ouverture de passage présente dans une paroi de bâtiment;
ledit manchon de passage (2) étant installé dans l'ouverture de passage et une substance de remplissage fluide étant apportée, par un canal d'amenée (10, 21) délimité par l'élément de tuyau (4), à un volume de remplissage (8) situé sur l'extérieur du manchon de passage (2), et sortant par une ouverture de sortie (7) prévue dans le manchon de passage (2), ladite ouverture de sortie (7) étant éloignée de l'extrémité proximale du manchon de passage (2), dans le sens du passage (13), d'au moins 30 % de la longueur du manchon de passage (2) considérée dans le sens du passage (13), une zone proximale du manchon de passage (2), prédéfinie par ce pourcentage, demeurant ainsi exempte d'ouvertures de sortie (7).

12. Procédé selon la revendication 11 en conjonction avec l'une des revendications 3 à 6, dans lequel l'élément de tuyau (4) est extrait du manchon de passage (2) suite à l'apport de matière fluide et libère ainsi un espace, précédemment occupé par l'élément de tuyau (4), pour le passage d'une conduite.

13. Utilisation d'un passage de conduite (1) destiné à être fixé de manière hermétique dans une ouverture de passage présente dans une paroi de bâtiment comportant
un manchon de passage (2) conçu pour être mis en place dans l'ouverture de passage et destiné au passage d'une conduite,
une ouverture de sortie (7) prévue dans le manchon de passage (2) et par laquelle une substance de remplissage fluide peut être apportée à un volume de remplissage (8) sur l'extérieur du manchon de passage (2);
ladite ouverture de sortie (7) étant éloignée de l'extrémité proximale du manchon de passage (2), dans le sens du passage (13), d'au moins 30 % de la longueur du manchon de passage (2) considérée dans le sens du passage (13), et une zone proximale du manchon de passage (2), prédéfinie par ce pourcentage, demeurant exempte d'ouvertures de sortie (7); avec
un élément de tuyau (4) prévu dans le manchon de passage (2) et délimitant un canal d'amenée (10, 21) par lequel la substance de remplissage fluide peut être apportée au volume de remplissage (8), et ce par l'ouverture de sortie (7) prévue dans le manchon de passage (2).

14. Utilisation selon la revendication 13 appliquée à un passage de conduite (1) selon l'une des revendications 2 à 10.
